# EUROPÄISCHE PATENTSCHRIFT

(11) **EP 3 295 065 B1**
(45) Veröffentlichungstag und Bekanntmachung des Hinweises auf die Patenterteilung: **19.06.2019**
(21) Anmeldenummer: 16700861.4
(22) Anmeldetag: 15.01.2016
(51) Int. Cl.: F16K 31/06, F16K 11/07, F15B 13/04, F15B 13/044

(54) **VENTIL, INSBESONDERE PROPORTIONAL-DRUCKREGELVENTIL**
VALVE, IN PARTICULAR PROPORTIONAL PRESSURE REGULATING VALVE
SOUPAPE, EN PARTICULIER SOUPAPE PROPORTIONNELLE DE RÉGULATION DE PRESSION

(30) Priorität: 09.05.2015 DE 102015006099
(43) Veröffentlichungstag der Anmeldung: 21.03.2018
(73) Patentinhaber: Hydac Fluidtechnik GmbH, 66280 Sulzbach/Saar (DE)
(72) Erfinder: BRUCK, Peter, 66484 Althornbach (DE); SCHNEIDER, Gerd, 66763 Dillingen (DE)
(74) Vertreter: Bartels und Partner, Patentanwälte
(86) Internationale Anmeldenummer: PCT/EP2016/000074
(87) Internationale Veröffentlichungsnummer: WO 2016/180506

(56) Entgegenhaltungen:
- DE-A1-102013 014 558

## Beschreibung

Ventil, insbesondere Proportional-Druckregelventil, mit einem federbelasteten Ventilkolben, der innerhalb eines Ventilgehäuses von einem bestrombaren Betätigungsmagneten angesteuert längsverfahrbar geführt ist und der abhängig von seiner Verfahrstellung eine fluidführende Verbindung zwischen einem Pumpenanschluss und einem Arbeitsanschluss sowie zwischen diesem Arbeitsanschluss und einem Tankanschluss im Ventilgehäuse herstellt oder wieder sperrt, wobei die einander gegenüberliegenden Stirnseiten des Ventilkolbens mit dem Druck des Tankanschlusses permanent beaufschlagt sind und wobei der Ventilkolben eine druckwirksame Regelfläche aufweist, die mit dem Arbeitsanschluss zur Bildung des Regeldruckes fluidführend verbindbar ist, und mit einem Ringraum in dem Ventilgehäuse, in den der Arbeitsanschluss in radialer oder axialer Richtung einmündet.

Dahingehende Ventile sind bekannt. So betrifft die DE 10 2005 022 693 A1 ein Ventil, insbesondere Proportional-Druckbegrenzungsventil, mit einem elektrisch ansteuerbaren Magnetsystem zum Ansteuern eines Betätigungsteils, das mit einem Ventilelement zusammenwirkt, das in einem Ventilgehäuse längsverfahrbar geführt ist und das in einer seiner Öffnungsstellungen einen fluidführenden Verbindungsweg zwischen einem Fluidein- und einem -auslass freigibt und in seiner Sperrstellung den dahingehenden Weg sperrt, wobei zwischen Betätigungsteil und Ventilelement in einem freien Abstand zwischen denselben ein Energiespeicher, vorzugsweise in Form einer Druckfeder, angeordnet ist, der das Ventilelement in Richtung seiner Schließstellung zu halten sucht, und wobei das Betätigungsteil in der Art eines Führungskolbens ausgeführt ist, der eine Längsführung für das Ventilelement aufweist. Mit der bekannten Lösung ist erreicht, dass das Ventilelement mit seinem Schließteil, das vorzugsweise in Sitzausführung mit einem Ventilsitz im Ventilgehäuse zusammenwirkt, immer achsgenau in seine vorgesehene Schließstellung gelangt, so dass etwaig auftretende Winkelverschiebungen mit Leckagen im Bereich des Ventilsitzes mit Sicherheit vermieden sind. Das bekannte Ventil arbeitet dem Grunde nach kraftgesteuert, und treten im Betrieb des Ventils ungewollt dynamische Effekte auf, werden diese von dem Energiespeicher in Form der Druckfeder kompensiert.

Ein weiteres Ventil in Form eines gattungsgemäßen Proportional-Druckregelventiles ist durch die DE 10 2013 014 558 A1 aufgezeigt. Dadurch dass bei dieser bekannten Ventillösung der jeweilige Differenzdruck, der beim Durchströmen der weiteren fluidführenden Verbindung zwischen dem Nutzanschluss und dem Tankanschluss entsteht, mittels einer Ansteuereinrichtung derart auf den Ventilkolben einwirkt, dass dieser entgegen einer Anschlagposition, von der ausgehend die weitere fluidführende Verbindung zusehends unterbunden wird, in eine voll geöffnete Öffnungsstellung gelangt, bei der gegenüber der Anschlagposition ein vergrößerter Öffnungsquerschnitt von Nutzanschluss zu Tankanschluss erreicht ist, ist eine Möglichkeit geschaffen, den Ventilkolbenhub zu vergrößern, ohne den Anfahrsprung der sogenannten P-I-Kennlinie in Kauf nehmen zu müssen. Somit kann das bekannte Ventil einen sehr großen Öffnungsquerschnitt beim Entlasten einer Kupplung erzeugen, die an das Ventil angeschlossen ist, und dennoch eine schnelle Trennung der Kupplung gewährleisten. Dergestalt lässt sich die Kupplung beispielsweise eines Fahrzeuges ruckfrei lösen, was insbesondere bei mobilen Arbeitsmaschinen ein wichtiger Sicherheitsaspekt ist.

Dahingehende Proportional-Druckregelventile können derart konzipiert sein, dass sie ohne Bestromung des Betätigungsmagnetsystems den maximalen Regeldruck erzeugen, was fachsprachlich dadurch zum Ausdruck gebracht wird, dass solche Ventile über eine sogenannte Failsafe-Kennlinie verfügen. Mit steigendem Strom am Betätigungsmagneten fällt der Regeldruck stetig ab, und sie werden daher häufig für Anwendungen benutzt, bei denen bei Stromausfall nur dann ein sicherer Zustand erzeugt wird, wenn der maximale Regeldruck am Verbraucher anliegt. Es können somit beispielsweise Kupplungen angesteuert werden, die stromlos druckbeaufschlagt sind. In der Regel werden solche Ventile jedoch sehr häufig mit einer Vorsteuerung ausgestattet.

Ausgehend von diesem Stand der Technik liegt der Erfindung die Aufgabe zugrunde, in bevorzugt kostengünstiger Weise einen Proportional-Druckregler mit sogenannter fallender Kennlinie zu realisieren. Eine dahingehende Aufgabe löst ein Ventil mit den Merkmalen des Patentanspruches 1 in seiner Gesamtheit.

Dadurch dass gemäß dem kennzeichnenden Teil des Patentanspruches 1 an dem Ventilkolben an der Stelle des Überganges zwischen dem Ringraum und der Einmündung des Arbeitsanschlusses die druckwirksame Regelfläche derart ausgebildet ist, dass im stromlosen Zustand des Betätigungsmagneten ein maximaler Regeldruck erzeugbar ist, in dem sich ein jeweiliger Einregelzustand zwischen der Kraft einer Druckfeder des federbelasteten Ventilkolbens und dem an der Regelfläche des Ventilkolbens anstehenden Regeldruck ergibt, fällt mit zunehmender Bestromung des Betätigungsmagnetsystems der Regeldruck des Ventils linear über einen vorgebbaren Druckbereich ab. Mithin handelt es sich bei dem erfindungsgemäßen Ventil um eine Lösung, bei der ein Failsafe-Druckregler direkt gesteuert realisiert ist.

Der Regeldruck wird ausschließlich an einem Durchmessersprung, der eine druckwirksame Regelfläche am Regel- oder Ventilkolben ausbildet und zwar im Bereich des jeweiligen Arbeitsanschlusses im Ventilgehäuse gemessen. Alle anderen Kolbenstirnseiten des Ventil- oder Regelkolbens sind demgegenüber im Wesentlichen mit dem Tankdruck beaufschlagt. Stromlos erfolgt somit eine Art Balance zwischen der Federkraft des insoweit federbelasteten Ventilkolbens und dem am Kreisring in Form des Durchmessersprunges am Ventilkolben anliegenden Regeldruck. Bestromt man das Betätigungsmagnetsystem, so wird ein mit steigendem Strom größer werdender Teil der angesprochenen Federkraft von der Magnetkraft des Betätigungsmagnetsystems kompensiert und der Regeldruck fällt vorzugsweise linear ab. Für die Realisierung der erfindungsgemäßen Lösung kann besonders bevorzugt ein kostengünstig realisierbares, sogenanntes drückendes Magnetsystem verwendet werden.

Im Folgenden wird die erfindungsgemäße Ventillösung anhand zweier Ausführungsbeispiele nach der Zeichnung näher erläutert. Dabei zeigen in prinzipieller und nicht maßstäblicher Darstellungen die
- Fig. 1 und 2: in der Art einer Längsschnittdarstellung zwei voneinander unterschiedliche Ausführungsformen des erfindungsgemäßen Ventiles; und
- Fig. 3: einen P-I-Kennlinienverlauf als sogenannte fallende Kennlinie, wie sie mit den Ventilen nach der Fig. 1 und 2 erreichbar ist.

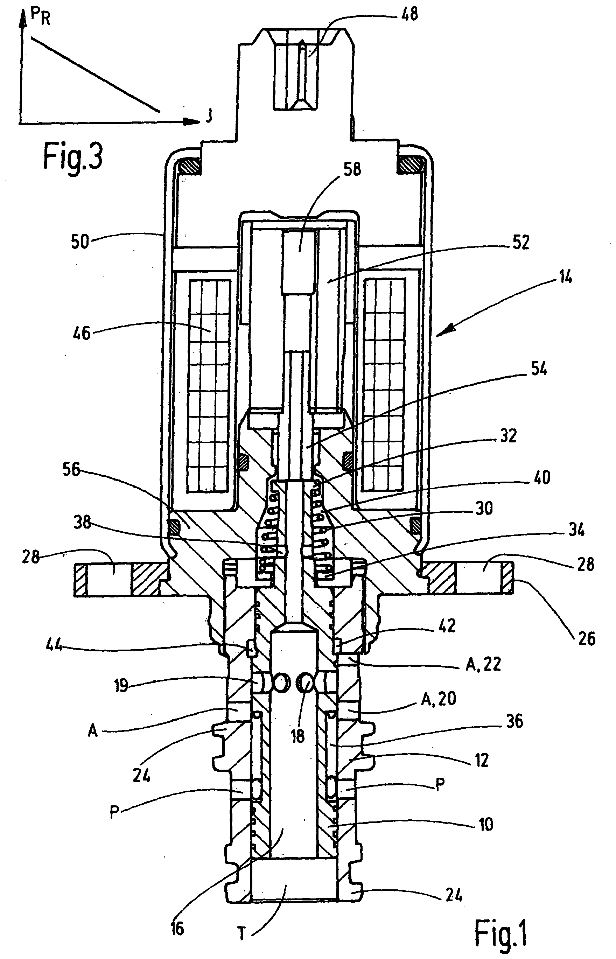

Die Fig. 1 zeigt im Längsschnitt das erfindungsgemäße Ventil, insbesondere in Form eines Proportional-Druckregelventils, mit einem federbelasteten Ventilkolben 10, der innerhalb eines Ventilgehäuses 12 von einem bestrombaren Betätigungsmagneten 14 angesteuert längsverfahrbar geführt ist. Abhängig von der Verfahrstellung des Ventilkolbens 10 ermöglicht dieser eine fluidführende Verbindung zwischen einem Pumpenanschluss P und einem Arbeitsanschluss A sowie zwischen diesem Arbeitsanschluss A und einem Tankanschluss T. Der Ventilkolben 10 ist ausgehend vom stirnseitigen Tankanschluss T am Ventilgehäuse 12 in der Art eines Hohlkolbens ausgebildet und durchgehend mit einem Zentralkanal 16 versehen, der radial in einen Querkanal 18 ausmündet, der in eine Ringnut 19 im Ventilkolben 10 austritt, die zumindest im stromlosen Zustand des Betätigungsmagneten 14 und mithin in der in Fig. 1 gezeigten Position randseitig von zwei Kanalabschnitten 20, 22 des Arbeitsanschlusses A im Ventilgehäuse 12 begrenzt ist.

Wie sich des Weiteren aus der Fig. 1 ergibt, kann ein jeweiliger Anschluss P, A aus mehreren Radialbohrungen bestehen, die außenumfangsseitig das Ventilgehäuse 12 durchgreifen. Das Ventilgehäuse 12 ist in Patronen- oder Cartridge-Bauweise ausgestaltet und weist außenumfangsseitig Querstege 24 auf, die paarweise einander benachbart zwischen sich eine Aufnahmenut begrenzen für die Aufnahme eines nicht näher dargestellten ringförmigen Dicht- und Führungssystems. Dergestalt lässt sich das Ventilgehäuse 12 in die Bohrung eines Ventilblockes (nicht dargestellt) aufnehmen, wobei sich der Betätigungsmagnet 14 mit einer Flanschplatte 26 auf einen dahingehenden Ventilblock von außen her aufsetzen und über Durchgangsbohrungen 28 entsprechend mit diesem Block verschrauben lässt.

Für die Federbelastung des Ventilkolbens dient eine Druckfeder 30, die in Blickrichtung auf die Fig. 1 gesehen nach oben hin sich konisch verjüngt und die mit ihrem einen freien, oberen Ende sich an einer radialen Verbreiterung 32 des Ventilkolbens 10 abstützt und mit ihrem anderen freien, unteren Ende an Teilen 34 des Ventilgehäuses 12 anliegt. Die Druckfeder 30 wird von Teilen des Ventilkolbens 10 durchgriffen, der sich insoweit in Richtung der Verbreiterung 32 absatzartig vom Durchmesser her entsprechend verjüngt. Der Ventilkolben 10 weist des Weiteren außenumfangsseitig eine Längsnut 36 auf, die je nach Verfahrstellung des Ventilkolbens 10 eine fluidführende Verbindung zwischen dem Druckanschluss P und dem unteren Arbeitsanschluss A respektive dem jeweiligen Kanalabschnitt 20 ermöglicht. Im Bereich des verjüngten oberen Abschnitts des Ventilkolbens 10 ist dessen Zentralkanal 16 von einem Querkanal 38 unterbrochen, der in einen Federraum 40 ausmündet, in dem die Druckfeder 30 aufgenommen ist.

In Blickrichtung auf die Fig. 1 gesehen mündet des Weiteren der obere Kanalabschnitt 22 im Umfang des Nutzanschlusses A in einen sich erweiternden Ringkanal oder Ringraum 42 im Ventilgehäuse 12 aus, und der Ventilkolben weist in seiner in der Fig. 1 gezeigten Verfahrstellung an dieser Stelle des Übergangs zwischen dem Ringraum 42 und dem oberen Kanalabschnitt 22 des Nutzanschlusses A eine druckwirksame Regelfläche 44 auf. Wie sich aus der Anschlussbelegung für das Ventil nach der Fig. 1 ergibt, sind mithin die einander gegenüberliegenden Stirnseiten des Ventilkolbens 10 mit dem Druck des Tankanschlusses T permanent beaufschlagt, und wie bereits dargelegt, weist der Ventilkolben 10 eine druckwirksame Regelfläche 44 auf, die mit dem Arbeitsanschluss A, wie dargestellt, zur Bildung des Regeldruckes P_{R} am Ventilkolben 10 fluidführend verbindbar ist. Im stromlosen Zustand des Betätigungsmagneten 14 ist mithin ein maximaler Regeldruck P_{R} erzeugbar, in dem sich ein jeweiliger Einregelzustand zwischen der Kraft der Druckfeder 30 des federbelasteten Ventilkolbens 10 und dem an der Regelfläche 44 des Ventilkolbens 10 anstehenden Regeldruck P_{R} im Betrieb des Ventils ergibt. Mit steigendem Strom I am Betätigungsmagneten 14 ist der größer werdende Teil der Federkraft der Druckfeder 30 von der Magnetkraft des Betätigungsmagneten 14 kompensiert, und der Regeldruck P_{R} fällt, was sich aus der Darstellung nach der Fig. 3 unmittelbar ergibt.

Der Betätigungsmagnet 14 weist in üblicher und daher nicht mehr näher beschriebenen Art und Weise eine Spulenwicklung 46 auf, die über ein Steckerteil 48 von außen her bestrombar ist. Der gesamte Betätigungsmagnet 14 ist über ein Gehäuseteil 50 druckdicht gekapselt, und im Innern ist ein längsverfahrbarer Magnetanker 52 vorhanden, der über einen Betätigungsstößel 54 unter unmittelbarer Anlage direkt auf den Ventilkolben 10 einwirkt. Der Betätigungsmagnet 14 ist als sogenannter drückender Magnet konzipiert, d.h., wird die Spulenwicklung 46 bestromt, fährt in Blickrichtung auf die Fig. 1 gesehen der Magnetanker 52 aus seinem dort gezeigten stromlosen Zustand nach unten und verfährt den Ventilkolben 10 gleichermaßen nach unten entgegen der Wirkung der Druckfeder 30. Für die dahingehende Kraftübertragung ist das Ventilgehäuse 12 für den Ventilkolben 10 in ein unteres Gehäuseteil 56 des Betätigungsmagneten 14 integriert. Für einen hemmnisfreien Betrieb des Magnetankers 52 und um innerhalb des gesamten Systems des Ventils eine Druckausgeglichenheit zu erreichen, ist der Magnetanker 52 zentral von einem durchgehenden Hohlkanal 58 durchgriffen, der wie dargestellt permanent mit dem durchgehenden Kanal 16 des Ventilkolbens 10 fluidführend verbunden ist.

Der Regeldruck P_{R} wird an dem Durchmessersprung am Ventilkolben 10 in Form der Regelfläche 44 gemessen, wobei alle anderen Kolbenstirnseiten mit dem Tankdruck beaufschlagt sind. Ist der Betätigungsmagnet 14 stromlos, erfolgt somit eine Balance zwischen der Druckfeder 30 und dem am Kreisring, respektive der Regelfläche 44 anliegenden Regeldruck P_{R}. Bestromt man nun die Spulenwicklung 46, so wird ein mit steigendem Strom größer werdender Teil der Druckfeder von der Magnetkraft des Betätigungsmagneten 14 kompensiert, und der Regeldruck P_{R} fällt, wie dies in der Fig. 3 anhand der P-I-Kennlinie dargestellt ist.

Mit der erfindungsgemäßen Ventillösung ist es also möglich, in kostengünstiger Weise einen Proportional-Druckregler mit fallender Kennlinie gemäß der exemplarischen Darstellung nach der Fig. 3 zu realisieren.

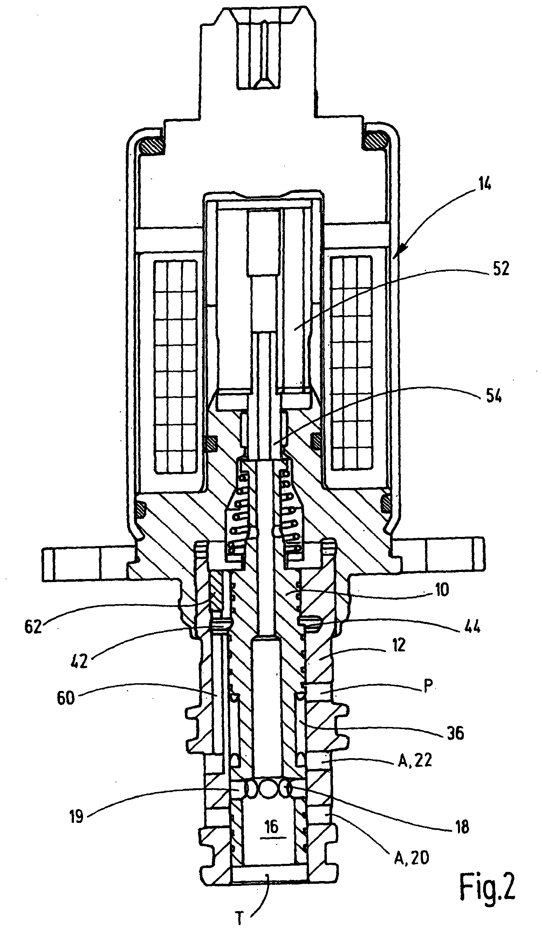

Im Folgenden wird die weitere Ausführungsform des erfindungsgemäßen Ventils nach der Fig. 2 nur noch insofern erläutert, als es sich wesentlich von dem vorangehenden Ausführungsbeispiel nach der Fig. 1 unterscheidet. Die bisher insoweit zu der Ausführungsform nach Fig. 1 getroffenen Ausführungen gelten auch für die Ausführungsform nach der Fig. 2, und die einander entsprechenden Bauteile werden mit denselben Bezugszeichen beziffert.

Bei der Ausführungsform nach der Fig. 2 befindet sich wiederum der Tankanschluss T an der unteren axialen Eintrittsöffnung des Ventilgehäuses 12. Im Gegensatz zu der Ventillösung nach der Fig. 2 folgen dann ausgehend vom Tankanschluss T die beiden Arbeitsanschlüsse A mit ihren jeweils korrespondierenden Kanalabschnitten 20, 22 nach. Darüber nachfolgend ist der Pumpenanschluss P im Ventilgehäuse 12 angeordnet. An den in Blickrichtung auf die Fig. 2 gesehen oberen Kanalabschnitt 22 schließt sich innerhalb des Ventilgehäuses 12 ein Längskanal 60 an, der nach oben hin in den im Ventilgehäuse 12 angeordneten erweiterten Ringkanal oder Ringraum 42 eintritt. In diesem Bereich des Ringraumes 42 ist gemäß der Darstellung nach der Fig. 2 wiederum die Durchmesserverringerung mit der Regelfläche 44 am Ventilkolben 10 vorhanden. Insoweit wird wiederum über die Regelfläche 44 der im Nutzanschluss A anstehende Druck über den senkrecht nach oben verlaufenden Längskanal 60 innerhalb des Ringraumes 42 angesteuert respektive ausgeregelt.

Auch im vorliegenden Ausführungsbeispiel mündet der zentrale Kanal 16 des Hohlkolbens als Ventilkolben 10 in radialer Richtung in den Querkanal 18 aus, der wiederum innerhalb des Ventilkolbens 10 nach außen hin von einer Ringnut 19 begrenzt ist. Der dahingehende Querkanal 18 mit Ringnut 19 ist bei dem Ausführungsbeispiel nach der Fig. 2 wiederum zwischen den beiden Kanalabschnitten 20, 22 des Nutzanschlusses A angeordnet; diesmal aber am unteren Ende des Ventilgehäuses 12 und mithin in entgegengesetzter Richtung, wie dies bei dem Ausführungsbeispiel nach der Fig. 1 der Fall ist. Die bereits erläuterte Längsnut 36, die sich hohlzylindrisch am Außenumfang des Ventilkolbens 10 erstreckt, endet wiederum endseitig gemäß der Schaltdarstellung in der Fig. 2 zwischen Pumpenanschluss P und oberem Nutzanschluss A mit dem kanalartigen Abschnitt 22 aus.

Der Längskanal 60 ist zu seiner Herstellung als Gesamtlängsbohrung im Ventilgehäuse 12 angeordnet, der nach oben hin in Richtung des Federraumes 40 austritt, wobei er in diesem Austrittsbereich durch einen Blindstopfen 62 druckdicht verschlossen ist. Da dem Grunde nach der Ventilkolben 10 nur vom Regeldruck P_{R} an der Regelfläche 44 angesteuert wird, kann er sehr zeitnah regelnd auf einen hydraulischen Steuerkreis einwirken, so dass Regel- oder Schaltverzögerungen im Betrieb des Ventils vermieden sind.

## Patentansprüche

1. Ventil, insbesondere Proportional-Druckregelventil, mit einem federbelasteten Ventilkolben (10), der innerhalb eines Ventilgehäuses (12) von einem bestrombaren Betätigungsmagneten (14) angesteuert längsverfahrbar geführt ist und der abhängig von seiner Verfahrstellung eine fluidführende Verbindung zwischen einem Pumpenanschluss (P) und einem Arbeitsanschluss (A) sowie zwischen diesem Arbeitsanschluss (A) und einem Tankanschluss (T) im Ventilgehäuse herstellt oder wieder sperrt, wobei die einander gegenüberliegenden Stirnseiten des Ventilkolbens (10) mit dem Druck des Tankanschlusses (T) permanent beaufschlagt sind und wobei der Ventilkolben (10) eine druckwirksame Regelfläche (44) aufweist, die mit dem Arbeitsanschluss (A) zur Bildung des Regeldruckes (P_{R}) fluidführend verbindbar ist, und mit einem Ringraum (42) in dem Ventilgehäuse (12), in den der Arbeitsanschluss (A) in radialer oder axialer Richtung einmündet, **dadurch gekennzeichnet, dass** an dem Ventilkolben (10) an der Stelle des Überganges zwischen dem Ringraum (42) und der Einmündung des Arbeitsanschlusses (A) die druckwirksame Regelfläche (44) derart ausgebildet ist, dass im stromlosen Zustand des Betätigungsmagneten (14) ein maximaler Regeldruck (P_{R}) erzeugbar ist, in dem sich ein jeweiliger Einregelzustand zwischen der Kraft einer Druckfeder (30) des federbelasteten Ventilkolbens (10) und dem an der Regelfläche (44) des Ventilkolbens (10) anstehenden Regeldruck (P_{R}) ergibt.

2. Ventil nach Anspruch 1, **dadurch gekennzeichnet, dass** mit steigendem Strom (I) am Betätigungsmagneten (14) der größer werdende Teil der Federkraft von der Magnetkraft des Betätigungsmagneten (14) kompensiert ist und der Regeldruck (P_{R}) fällt.

3. Ventil nach Anspruch 1 oder 2, **dadurch gekennzeichnet, dass** der Betätigungsmagnet (14) in drückender Bauweise derart konzipiert ist, dass mit zunehmender Bestromung (I) entgegen der Wirkung der Federkraft der Ventilkolben (10) in Richtung auf den Tankanschluss (T) zubewegt wird und dabei zusehends den Fluidweg zwischen Pumpenanschluss (P) und Arbeitsanschluss (A) sperrt.

4. Ventil nach einem der vorstehenden Ansprüche, **dadurch gekennzeichnet, dass** die druckwirksame Fläche (44) durch einen am Ventilkolben (10) angeordneten Durchmessersprung gebildet ist, der zumindest teilweise im Ringraum (42) des Ventilgehäuses (12) verfahrbar geführt ist.

5. Ventil nach einem der vorstehenden Ansprüche, **dadurch gekennzeichnet, dass** der Ventilkolben (10) ausgehend vom Tankanschluss (T) durchgehend mit einem Kanal (18) versehen ist, der radial in einen Querkanal (18) ausmündet, der in eine Ringnut (19) im Ventilkolben (10) austritt, die zumindest im stromlosen Zustand randseitig von zwei Kanalabschnitten (20, 22) des Arbeitsanschlusses (A) im Ventilgehäuse (12) begrenzt ist.

6. Ventil nach einem der vorstehenden Ansprüche, **dadurch gekennzeichnet, dass** die Druckfeder (30) mit ihrem einen freien Ende am Ventilkolben (10) anliegt und mit ihrem anderen freien Ende an Teilen (34) des Ventilgehäuses (12), und dass der Ventilkolben (10) die Druckfeder (30) durchgreift.

7. Ventil nach einem der vorstehenden Ansprüche, **dadurch gekennzeichnet, dass** an dem einen freien stirnseitigen Ende des Ventilkolbens (10) der Druck am Tankanschluss (A) angreift, der in axialer Richtung das Ventilgehäuse (12) durchgreift, und dass an dem anderen freien stirnseitigen Ende des Ventilkolbens (10) ein Betätigungsstößel (54) des Betätigungsmagneten (14) anliegt.

8. Ventil nach einem der vorstehenden Ansprüche, **dadurch gekennzeichnet, dass** der Ventilkolben (10) außenumfangsseitig eine Längsnut (36) aufweist, die je nach Verfahrstellung des Ventilkolbens (10) eine fluidführende Verbindung zwischen dem Druckanschluss (P) und dem Arbeitsanschluss (A) ermöglicht.

9. Ventil nach einem der vorstehenden Ansprüche, **dadurch gekennzeichnet, dass** der Magnetanker (52) des Betätigungsmagneten (14) einen durchgehenden Hohlkanal (58) aufweist, der permanent mit dem durchgehenden Kanal (16) des Ventilkolbens (10) fluidführend verbunden ist.

## Claims

1. Valve, in particular proportional pressure control valve, with a spring-loaded valve piston (10), which is guided longitudinally in travel within a valve body (12) by an energisable actuating solenoid (14) and which, depending on its travel position, makes a fluid-carrying connection, or closes it again, between a pump connection (P) and a working connection (A) as well as between this working connection (A) and a tank connection (T) in the valve body, wherein the opposing end faces of the valve piston (10) are permanently subjected to the pressure of the tank connection (T) and wherein the valve piston (10) has a pressure-active control surface (44), which can open have a fluid-carrying link to the working connection (A) to create the control pressure (PR), and with an annular space (42) in the valve body (12), into which the working connection (A) opens in radial or axial direction, **characterised in that** on the valve piston (10), at the position of the transition between the annular space (42) and the inlet of the working connection (A), the pressure-active control surface (44) is configured so that a maximum control pressure (PR) can be produced in the de-energised state of the actuating solenoid (14) in which a respective control state is produced between the force of a compression spring (30) of the spring-loaded valve piston (10) and the control pressure (P_{R}) arising at the control surface (44) of the valve piston (10).

2. Valve in accordance with claim 1, **characterised in that**, with increasing current (I) at the actuating solenoid (14) the increasing proportion of the spring force is compensated by the magnetic force of the actuating solenoid (14) and the control pressure (P_{R}) drops.

3. Valve in accordance with claim 1 or 2, **characterised in that** the actuating solenoid (14) is designed to exert pressure so that, with increasing energising (I), it is moved against the action of the spring force of the valve piston (10) in the direction of the tank connection (T) and thereby increasingly blocks the fluid route between pump connection (P) and working connection (A).

4. Valve in accordance with one of the preceding claims, **characterised in that** the pressure-active surface (44) is formed by a change of diameter on the valve piston (10), which be guided to travel at least partly in the annular space (42) of the valve body (12).

5. Valve in accordance with one of the preceding claims, **characterised in that** the valve piston (10) is provided with a continuous channel (18), originating from the tank connection (T), which opens radially into a transverse channel (18), which exits into an annular slot (19) in the valve piston (10) which, at least in the de-energised state, is defined on the periphery by two channel sections (20, 22) of the operating connection (A) in the valve body (12).

6. Valve in accordance with one of the preceding claims, **characterised in that** the compression spring (30) bears with its one free end on the valve piston (10) and with its other free end on parts (34) of the valve body (12), and that the valve piston (10) passes through the compression spring (30).

7. Valve in accordance with one of the preceding claims, **characterised in that**, at the one free end face of the valve piston (10), the pressure acts on the tank connection (A), which passes through the valve body (12) in the axial direction, and that at the other free end of the valve piston (10) an actuating plunger (54) of the actuating solenoid (14) engages.

8. Valve in accordance with one of the preceding claims, **characterised in that** the valve piston (10) has a longitudinal slot (36) which, depending on the travel position of the valve piston (10), enables a fluid-carrying connection between the pressure connection (P) and the working connection (A).

9. Valve in accordance with one of the preceding claims, **characterised in that** the solenoid armature (52) of the actuating solenoid (14) has a continuous hollow duct (58), which has a permanent fluid-carrying connection to the continuous channel (16) of the valve piston (10).

## Revendications

1. Soupape, notamment soupape proportionnelle de régulation de la pression, comprenant un piston (10) de soupape, qui est soumis à l'action d'un ressort, qui est guidé avec possibilité de se déplacer longitudinalement à l'intérieur d'un corps (12) de la soupape, en étant commandé par un aimant (14) d'actionnement pouvant être alimenté en courant, et qui produit ou obture à nouveau, en fonction de sa position de déplacement, une liaison fluidique entre un raccord (P) de pompe et un raccord (A) de travail, ainsi qu'entre ce raccord (A) de travail et un raccord (T) de réservoir du corps de la soupape, les côtés frontaux opposés l'un à l'autre du piston (10) de la soupape étant soumis, en permanence, à la pression du raccord (T) de réservoir et le piston (10) de la soupape ayant une surface (44) de régulation efficace en pression, qui peut être reliée fluidiquement au raccord (A) de travail pour former la pression (P_{R}) de régulation, et comprenant, dans le corps (12) de la soupape, un espace (42) annulaire, dans lequel le raccord (A) de travail débouche dans la direction radiale ou axiale, **caractérisée en ce que**, sur le piston (10) de la soupape, au point de transition entre l'espace (42) annulaire et l'embouchure du raccord (A) de travail, la surface (44) de régulation efficace en pression est constituée de manière à produire, dans l'état sans courant de l'aimant (14) d'actionnement, une pression (P_{R}) de régulation maximum, dans laquelle il y a un état d'accord respectif entre la force d'un ressort (30) de compression du piston (10) de la soupape soumis à l'action d'un ressort et la pression (P_{R}) de régulation s'appliquant à la surface (44) de régulation du piston (10) de la soupape.

2. Soupape suivant la revendication 1, **caractérisée en ce qu'**au fur et à mesure qu'augmente le courant (I) à l'aimant (14) d'actionnement, la partie grandissante de la force du ressort est compensée par la force de l'aimant (14) d'actionnement et la pression (P_{R}) de régulation baisse.

3. Soupape suivant la revendication 1 ou 2, **caractérisée en ce que** l'aimant (14) d'actionnement est conçu en mode de construction plongeant, de manière à ce qu'au fur et à mesure qu'augmente l'alimentation (I) en courant, le piston (10) de la soupape va, à l'encontre de l'effet de la force du ressort, en direction du raccord (T) de réservoir et, ainsi, obture visiblement le trajet de fluide entre le raccord (P) de pompe et le raccord (A) de travail.

4. Soupape suivant l'une des revendications précédentes, **caractérisée en ce que** la surface (44) efficace en pression est formée par un saut de diamètre sur le piston (10) de la soupape, qui est guidé de manière à se déplacer, au moins en partie, dans l'espace (42) annulaire du corps (12) de la soupape.

5. Soupape suivant l'une des revendications précédentes, **caractérisée en ce que** le piston (10) de la soupape est pourvu, à partir du raccord (T) de réservoir, d'une manière continue, d'un canal (18), qui débouche radialement dans un canal (18) transversal sortant dans une rainure (19) annulaire du piston (10) de la soupape, rainure qui est délimitée dans le corps (12) de la soupape, au moins à l'état sans courant, du côté du bord, par deux tronçons (20, 22) de canal du raccord (A) de travail.

6. Soupape suivant l'une des revendications précédentes, **caractérisée en ce que** le ressort (30) de compression s'applique, par l'une de ses extrémités libres, au piston (10) de la soupape et par son autre extrémité libre à des parties (34) du corps (12) de la soupape et **en ce que** le piston (10) de la soupape pénètre dans le ressort (30) de compression.

7. Soupape suivant l'une des revendications précédentes, **caractérisée en ce qu'**à l'une des extrémités libres du côté frontal du piston (10) de la soupape, la pression s'applique du raccord (A) de réservoir, qui traverse, dans la direction axiale, le corps (12) de la soupape et **en ce que**, à l'autre extrémité du côté frontal du piston (10) de la soupape, s'applique un poussoir (54) d'actionnement de l'aimant (14) d'actionnement.

8. Soupape suivant l'une des revendications précédentes, **caractérisée en ce que** le piston (10) de la soupape a, du côté du pourtour extérieur, une cannelure (36), qui, suivant la position en déplacement du piston (10) de la soupape, rend possible une liaison fluidique entre le raccord (P) de pression et le raccord (A) de travail.

9. Soupape suivant l'une des revendications précédentes, **caractérisée en ce que** l'armature (52) de l'aimant (14) d'actionnement a un canal (58) creux continu, qui communique fluidiquement en permanence avec le canal (16) continu du piston (10) de la soupape.
